# EUROPEAN PATENT APPLICATION

(11) **EP 4 776 098 A1**
(43) Date of publication of application: **15.07.2026**
(21) Application number: 25223523.9
(22) Date of filing: 15.12.2025
(51) Int. Cl.: G06F 1/16, G06F 1/26, G06F 1/20, A63F 13/73, A63F 13/98

(54) **POWER SUPPLY DEVICE AND POWER SUPPLY SYSTEM**

(30) Priority: 10.01.2025 JP 2025004326
(71) Applicant: Nintendo Co., Ltd., Kyoto-shi, Kyoto 601-8501 (JP)
(72) Inventor: YOSHIKAWA, Akihiro, Kyoto, 601-8501 (JP); IKEDA, Tomofumi, Kyoto, 601-8501 (JP); AJIMIZU, Tatsuya, Kyoto, 601-8501 (JP)
(74) Representative: Bardehle Pagenberg Partnerschaft mbB Patentanwälte Rechtsanwälte

(57) **Abstract**

Power supply device is connectable to first gaming device and second gaming device to feed power to connection device, connection device being first gaming device or second gaming device connected to power supply device. Power supply device includes communication controller configured to transmit and receive data to and from connection device, determiner configured to determine whether connection device is first gaming device or second gaming device based on data received by communication controller from connection device, and storage storing first identifier corresponding to first gaming device and second identifier corresponding to second gaming device. Communication controller transmits first identifier or second identifier to connection device based on determination result obtained by determiner.

## Description

### Technical Field

The present disclosure relates to a power supply device for feeding power to a gaming device and a power supply system including the power supply device and the gaming device.

### Description of the Background

An example power supply device is described in Patent Document 1. In Patent Document 1, the power supply device is connected to a power receiver. The power supply device transmits device information to the power receiver. To determine whether the connected power supply device is an appropriate device, the power receiver performs authentication based on the device information received from the power supply device.

### PRIOR ART DOCUMENTS

### PATENT DOCUMENTS

Patent Document 1: JP-A-2022-24409

### BRIEF SUMMARY

When the power supply device is connected to another power receiver of a different type (hereafter referred to as a different receiver), the different receiver performs authentication of the power supply device in the same manner as the power receiver described above. In this case, the power supply device transmits the same device information to the different receiver.

Whereas the power receiver first connected may successfully perform the authentication with the device information received from the power supply device, the different receiver may not successfully perform the authentication with the device information received from the power supply device.

In response to the above issue, one or more aspects of the present disclosure are directed to a power supply device and a power supply system that can be properly authenticated by any of multiple types of gaming devices connected to the power supply device or the power supply system.

In response to the above, a power supply device and a power supply system according to one or more aspects of the present disclosure may have, for example, the structures according to (1) to (10) below.
(1) A power supply device according to an aspect of the present disclosure is connectable to a first gaming device and a second gaming device to feed power to a connection device, the connection device being the first gaming device or the second gaming device connected to the power supply device. The power supply device includes a communication controller configured to transmit and receive data to and from the connection device, a determiner configured to determine whether the connection device is the first gaming device or the second gaming device based on data received by the communication controller from the connection device, and a storage configured to store a first identifier corresponding to the first gaming device and a second identifier corresponding to the second gaming device. The communication controller transmits the first identifier or the second identifier to the connection device based on a determination result obtained by the determiner.

With the structure according to (1), the determiner determines whether the connection device connected to the power supply device is the first gaming device or the second gaming device. The communication controller transmits the first identifier or the second identifier corresponding to the connection device based on the determination result obtained by the determiner. The power supply device can thus be properly authenticated by the connection device when the connection device connected to the power supply device is any of the first gaming device and the second gaming device.

(2)
In the structure according to (1), the communication controller may transmit first data including a combination of a voltage value and a current value to the connection device, and may receive, after transmitting the first data, second data including a combination of a voltage value and a current value at least once from the connection device, and the determiner may determine whether the connection device is the first gaming device or the second gaming device based on at least a number of times the second data is received.

With the structure according to (2), the determiner can determine whether the connection device is the first gaming device or the second gaming device when the number of times the second data is transmitted by the first gaming device is different from the number of times the second data is transmitted by the second gaming device.

(3)
In the structure according to (1) or (2), the power supply device may feed power to the connection device under a Universal Serial Bus Power Delivery (USB PD) standard, and the determiner may determine whether the connection device is the first gaming device or the second gaming device based on at least information corresponding to a specific revision or information corresponding to a version of a structured vendor defined message (VDM) included in the data received from the connection device.

With the structure according to (3), the determiner can determine whether the connection device is the first gaming device or the second gaming device when the specific revision of the Universal Serial Bus (USB) Power Delivery (PD) standard of the first gaming device is different from that of the second gaming device.

With the structure according to (3), the determiner can determine whether the connection device is the first gaming device or the second gaming device when the version of the structured vendor defined message (VDM) of the USB PD standard of the first gaming device is different from that of the second gaming device.

(4)
In the structure according to any one of (1) to (3), the power supply device may include an output controller configured to output image data to an external display device connected to the power supply device, and when the communication controller receives image data from the connection device after transmitting the first identifier or the second identifier to the connection device, the output controller may output the image data received by the communication controller to the external display device.

The communication controller receives image data from the connection device after transmitting the first identifier or the second identifier to the connection device. This indicates that the connection device has transmitted the image data to the power supply device based on successful authentication of the power supply device performed by the connection device. In this case, the output controller outputs the image data received by the communication controller to the external display device. With the structure according to (4), image data from the connection device can be smoothly displayed on the external display device through the power supply device as described above.

(5)
In the structure according to any one of (1) to (4), when the communication controller receives, from the connection device, corresponding image data corresponding to a predetermined image, the corresponding image data may have different data volumes for the connection device being the first gaming device and for the connection device being the second gaming device.

With the structure according to (5), the power supply device can receive image data with image quality corresponding to the type of the connection device connected to the power supply device and output the image data to the external display device.

(6)
In the structure according to any one of (1) to (5), the power supply device may include a fan configured to allow air to flow between an inside and an outside of the power supply device, and the fan may have different rotational speeds per unit time for the connection device being the first gaming device and for the connection device being the second gaming device.

With the structure according to (6), the power supply device can change the rotational speed of the fan based on the type of the connection device connected to the power supply device. For example, for the power supply device that generates more heat with the first gaming device connected than with the second gaming device connected, the power supply device can increase the rotational speed of the fan to be higher when the first gaming device is connected to the power supply device than when the second gaming device is connected to the power supply device.

(7)
In the structure according to (6), the power supply device may include a receiving portion configured to receive the connection device, and the power supply device may have an opening at a position to face the connection device received in the receiving portion to allow airflow.

With the structure according to (7), for example, when the connection device has an opening at a position to face the opening in the power supply device, the fan allows air to flow between the power supply device and the connection device. This facilitates airflow in the power supply device and the connection device. Thus, the power supply device and the connection device are internally cooled more effectively.

(8)
In the structure according to any one of (1) to (7), the communication controller may transmit and receive data to and from the connection device based on a Universal Serial Bus 3.0 standard when the determiner determines that the connection device is the first gaming device, and may transmit and receive data to and from the connection device based on a Universal Serial Bus 2.0 standard when the determiner determines that the connection device is the second gaming device.

With the structure according to (8), the power supply device and the connection device can exchange data with each other based on the standard corresponding to the type of the connection device connected to the power supply device.

(9)
In the structure according to any one of (1) to (8), the first gaming device may be a successor to the second gaming device.

With the structure according to (9), the power supply device connectable to the second gaming device is also connectable to the first gaming device, which is a successor that has been launched in the market later than the second gaming device.

(10)
A power supply system according to an aspect of the present disclosure is the power supply device according to any one of (1) to (9), and the connection device connected to the power supply device, the connection device transmits no image data to the communication controller in the power supply device when obtaining, from the communication controller in the power supply device, an identifier different from a corresponding identifier among the first identifier and the second identifier, and the power supply device feeds power to the connection device.

With the structure according to (10), the connection device transmits no image data to the power supply device for which the authentication is failed, but can receive power from the power supply device.

The power supply device and the power supply system according to the above aspects of the present disclosure can be properly authenticated by any of multiple types of gaming devices connected to the power supply device or the power supply system.

### BRIEF DESCRIPTION OF DRAWINGS

Fig. 1 is a schematic perspective view of a power supply system according to an embodiment of the present disclosure.
Fig. 2 is a schematic cross-sectional view taken along line II-II in Fig. 1.
Fig. 3 is a block diagram of the power supply system according to the embodiment of the present disclosure, showing its electrical configuration.
Fig. 4 is a sequence diagram of an example communication process performed by a power supply device and a connection device.
Fig. 5 is a sequence diagram of an example communication process performed by the power supply device and the connection device.
Fig. 6 is a flowchart of an example process performed by the power supply device.
Fig. 7 is a flowchart of an example process performed by the power supply device.
Fig. 8 is a flowchart of an example process performed by the power supply device.
Fig. 9 is a table describing differences in the operation of the power supply system based on the type of the connection device.

### DETAILED DESCRIPTION

### (Embodiments)

A power supply system according to an embodiment of the present disclosure will now be described.

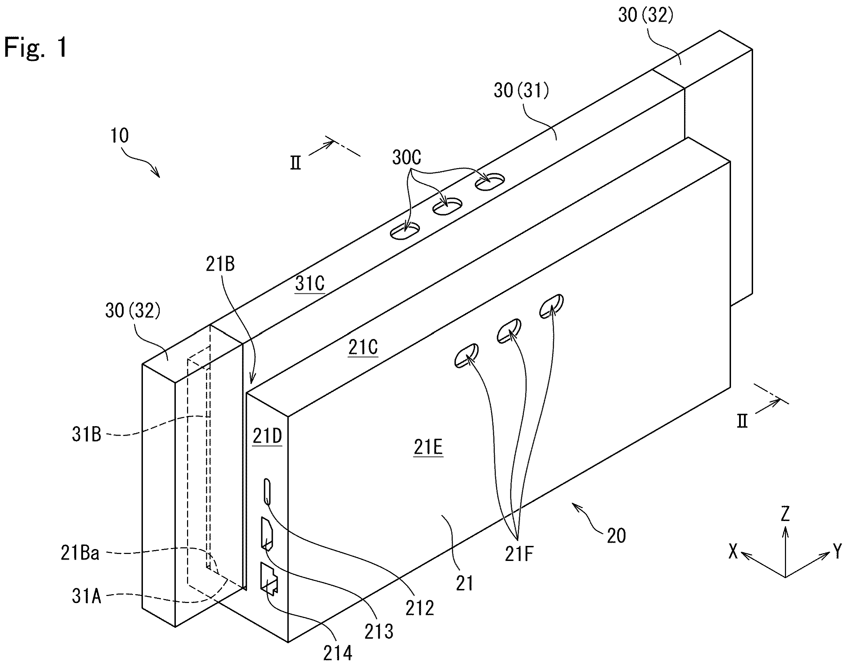

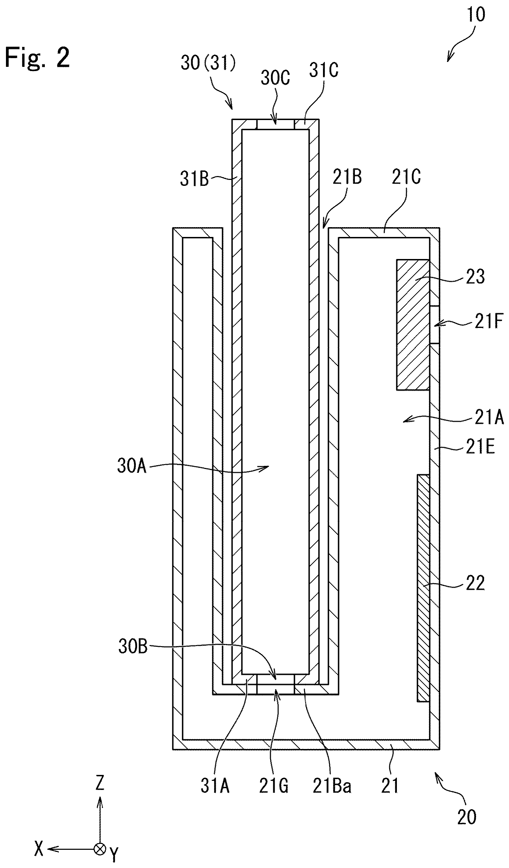

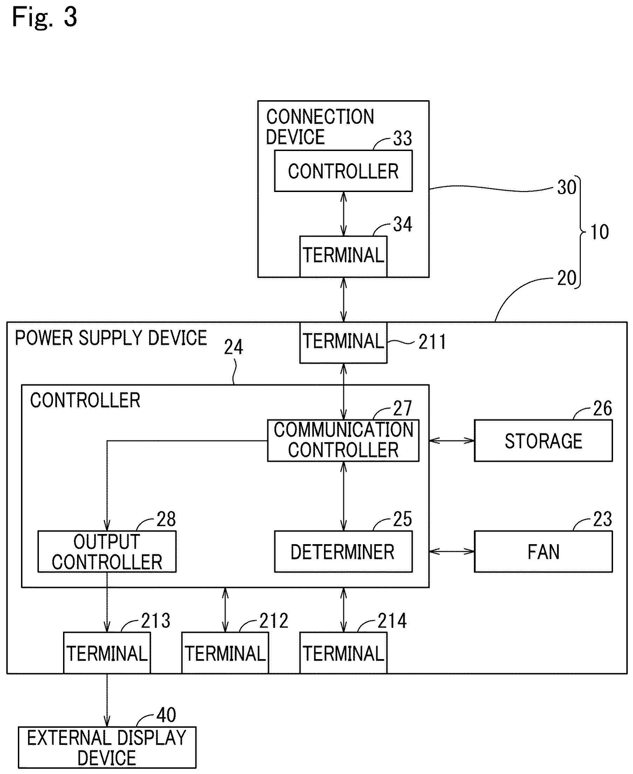

Fig. 1 is a schematic perspective view of the power supply system according to the embodiment of the present disclosure. Fig. 2 is a schematic cross-sectional view taken along line II-II in Fig. 1. Fig. 3 is a block diagram of the power supply system according to the embodiment of the present disclosure, showing its electrical configuration.

For ease of explanation, a power supply device 20 receiving a connection device 30 (in other words, in the state shown in Fig. 1) has a depth direction referred to as the X-direction, a width direction as the Y-direction, and a height direction as the Z-direction herein and in the drawings. The X-direction, the Y-direction, and the Z-direction are perpendicular to one another. In the Z-direction, down refers to the direction in which a receiving portion 21B (refer to Figs. 1 and 2) of a housing 21 of the power supply device 20 has its bottom, and up refers to the direction in which the receiving portion 21B has an opening (opposite to the bottom).

As shown in Figs. 1, 2, and 3, a power supply system 10 according to the embodiment of the present disclosure includes the power supply device 20 and the connection device 30 connected to the power supply device 20. Connection herein basically refers to electrical connection.

In the present embodiment, the connection device 30 is a gaming console. The connection device 30 is not limited to a gaming console, and may be, for example, a smartphone or a personal computer.

As shown in Fig. 1, the connection device 30 includes a body 31 and two controllers 32 detachably attached to the body 31.

The body 31 has an external shape that is a substantially rectangular prism in general. The body 31 may have an external shape other than a substantially rectangular prism.

As shown in Fig. 3, the body 31 includes a controller 33, a terminal 34, and a display (not shown).

The controller 33 performs information processing for implementing various functions of the connection device 30. The controller 33 includes, for example, a processor. The processor may include, for example, a communication circuit for transmitting and receiving data to and from an external device (e.g., the power supply device 20).

The processor includes at least one of, for example, a central processing unit (CPU), a micro processing unit (MPU), a graphics processing unit (GPU), a digital signal processor (DSP), a field-programmable gate array (FPGA), a microcontroller unit (MCU), or an application-specific integrated circuit (ASIC). A storage is, for example, a volatile memory or a nonvolatile memory. The volatile memory is, for example, a random-access memory (RAM), a static RAM (SRAM), or a dynamic RAM (DRAM). The nonvolatile memory is, for example, a read-only memory (ROM), a hard disk drive (HDD), a solid-state drive (SSD), or a flash memory. For example, the processor executes a program stored in the storage to perform various types of information processing.

The terminal 34 is located on a lower wall 31A (refer to Figs. 1 and 2) of the body 31. The terminal 34 is connected to the controller 33. When the connection device 30 is connected to the power supply device 20, the terminal 34 is connected to a terminal 211 of the power supply device 20.

The display is located on a side wall 31B (refer to Figs. 1 and 2) of the body 31. The display is, for example, a liquid crystal display that can display images.

As shown in Fig. 1, the two controllers 32 are attached to the two ends of the body 31 in the Y-direction. The controllers 32 may be attached to or detached from the body 31 in any known manner, such as fitting, sliding, or with magnets. The connection device 30 may include any number of controllers 32 other than two. The connection device 30 may include no controller 32.

The controllers 32 are used to operate the connection device 30. The controllers 32 may have a wired connection to the body 31. The controllers 32 may allow a remote operation of the connection device 30 through a network such as the Internet. In this case, multiple users at different locations can play the game performed on the connection device 30. Each of the two controllers 32 includes, for example, a stick and operation buttons (not shown) used for operations.

The power supply device 20 shown in Figs. 1, 2, and 3 may serve as a charger to charge the connection device 30 connected to the power supply device 20. More specifically, the power supply device 20 can feed power to the connection device 30. The power supply device 20 may extend the functionality of the connection device 30 connected to the power supply device 20. For example, the extension of the functionality of the connection device 30 includes connecting the connection device 30 to a wired local area network (LAN) with the power supply device 20. For example, the extension of the functionality of the connection device 30 includes allowing an image displayed on the display of the connection device 30 to be displayed on an external display device 40 (refer to Fig. 3) connected to the power supply device 20. The external display device 40 is connected to the power supply device 20 with a terminal 213 (refer to Fig. 1) of the power supply device 20 described later. The external display device 40 is, for example, a television or an external display.

A first gaming device and a second gaming device are connectable to the power supply device 20. Either the first gaming device or the second gaming device connected to the power supply device 20 is the connection device 30. More specifically, the first gaming device is the connection device 30 when the first gaming device is connected to the power supply device 20, and the second gaming device is the connection device 30 when the second gaming device is connected to the power supply device 20.

The first gaming device and the second gaming device are both gaming consoles, but are different devices. For example, the display included in the first gaming device and the display included in the second gaming device display images at different resolutions. For example, the CPU included in the first gaming device has a higher computing power than the CPU included in the second gaming device.

In the present embodiment, the first gaming device is a successor to the second gaming device. The first gaming device has been launched in the market later than the second gaming device.

As described above, the power supply device 20 can feed power to and extend the functionality of the first gaming device, which is a successor, and can also feed power to and extend the functionality of the second gaming device, which is a predecessor.

As shown in Figs. 1 and 2, the power supply device 20 includes the housing 21 with an internal space 21A (refer to Fig. 2). The housing 21 includes the receiving portion 21B that receives the connection device 30. In the present embodiment, the receiving portion 21B is a groove on an upper wall 21C of the housing 21. The connection device 30 is placed in the receiving portion 21B, which is a groove. The power supply device 20 thus supports the connection device 30. The housing 21 may have a shape other than the shape shown in Figs. 1 and 2.

As shown in Fig. 3, the housing 21 of the power supply device 20 includes the terminal 211. The terminal 211 is located on a bottom wall 21Ba (refer to Figs. 1 and 2) of the receiving portion 21B. The terminal 211 is connected to a controller 24 in the power supply device 20. When the connection device 30 is received in the receiving portion 21B of the power supply device 20, the terminal 211 is connected to the terminal 34 of the connection device 30. This connects the controller 24 in the power supply device 20 and the controller 33 in the connection device 30. In other words, the connection device 30 is received in the receiving portion 21B to be connected to the power supply device 20 in the present embodiment.

The power supply device 20 and the connection device 30 may not be connected in the manner described above (specifically, by the connection device 30 received in the receiving portion 21B). For example, the power supply device 20 and the connection device 30 may be connected with, for example, a wire. In this case, the connection device 30 may not be necessarily received by the power supply device 20, and thus the power supply device 20 may not include the receiving portion 21B.

As shown in Fig. 1, the housing 21 of the power supply device 20 includes terminals 212, 213, and 214. The terminals 212, 213, and 214 are located on a side wall 21D of the housing 21. The side wall 21D is one of the outer walls of the housing 21, and faces in the Y-direction. In the present embodiment, the terminal 212 is a Universal Serial Bus (USB, registered trademark) Type-C terminal. In the present embodiment, the terminal 213 is a High-Definition Multimedia Interface (HDMI, registered trademark) terminal. The external display device 40 (refer to Fig. 3) is connected to the terminal 213 with a wire. In the present embodiment, the terminal 214 is a LAN terminal. As shown in Fig. 3, the terminals 212, 213, and 214 are connected to the controller 24 in the power supply device 20.

As shown in Fig. 2, the power supply device 20 includes a substrate 22 and a fan 23. The substrate 22 and the fan 23 are located in the internal space 21A of the housing 21. The substrate 22 has various electronic components, such as the controller 24 and an internal storage medium, mounted on the substrate 22. The fan 23 allows air to flow between the internal space 21A of the housing 21 and the outside of the housing 21.

As shown in Fig. 3, the fan 23 is driven and controlled by the controller 24. The fan 23 is driven to facilitate airflow in the internal space 21A of the housing 21.

Details will be described below. As shown in Figs. 1 and 2, the housing 21 includes a side wall 21E with openings 21F. The side wall 21E is one of the outer walls of the housing 21, and faces in the X-direction. As shown in Fig. 2, the housing 21 has an opening 21G in the bottom wall 21Ba of the receiving portion 21B. When the fan 23 is driven, the fan 23 adjacent to the openings 21F draws air outside the housing 21 into the internal space 21A of the housing 21 through the openings 21F. In other words, the fan 23 serves as an intake fan in the present embodiment. The air drawn into the internal space 21A is discharged out of the housing 21 through the opening 21G. The fan 23 may serve as an exhaust fan. In this case, the fan 23 is located, for example, adjacent to the opening 21G.

As shown in Figs. 1 and 2, the connection device 30 has an opening 30B and openings 30C in the present embodiment. As shown in Fig. 2, the opening 30B is located in the lower wall 31A of the body 31 of the connection device 30. As shown in Figs. 1 and 2, the openings 30C are arranged in an upper wall 31C of the body 31 of the connection device 30. Air can flow between an internal space 30A of the connection device 30 and the outside of the connection device 30 through the opening 30B and the openings 30C.

The opening 30B in the connection device 30 and the opening 21G in the power supply device 20 face each other in the Z-direction when the connection device 30 is received by the power supply device 20. Air discharged out of the housing 21 of the power supply device 20, with the fan 23 driven in the power supply device 20, through the opening 21G enters the internal space 30A of the connection device 30 through the opening 30B. The air that has entered the internal space 30A is discharged out of the connection device 30 through the openings 30C.

The connection device 30 may include a fan in the internal space 30A. In this case, the fan in the internal space 30A facilitates airflow from the opening 30B to the openings 30C through the internal space 30A.

Although air flows from the internal space 21A of the housing 21 of the power supply device 20 to the internal space 30A of the connection device 30 in the present embodiment, air may flow oppositely from the internal space 30A to the internal space 21A. In this case, for example, the fan in the connection device 30 serves as an intake fan.

As shown in Fig. 3, the power supply device 20 includes the controller 24 and a storage 26.

For example, the controller 24 executes a program stored in the storage 26 to implement the functions of a determiner 25, a communication controller 27, and an output controller 28 (described later). The controller 24 includes, for example, a processor. The processor includes at least one of, for example, a CPU, an MPU, a GPU, a DSP, an FPGA, a system on chip (SoC), or an ASIC. The processor may include a communication circuit for transmitting and receiving data to and from an external device (e.g., the connection device 30).

The storage 26 is, for example, a volatile memory or a nonvolatile memory. The volatile memory is, for example, a RAM, an SRAM, or a DRAM. The nonvolatile memory is, for example, a ROM, an HDD, an SSD, or a flash memory.

The storage 26 stores at least a first identifier (ID) and a second ID. The first ID corresponds to the first gaming device. The second ID corresponds to the second gaming device. In the present embodiment, the first ID is a product ID of the first gaming device, and the second ID is a product ID of the second gaming device. A product ID is, for example, a number unique to a product. The first ID and the second ID may each be any other ID such as a vendor ID. A vendor ID is, for example, an ID unique to a company.

The communication controller 27 transmits and receives data to and from the connection device 30 connected to the power supply device 20. The data is transmitted and received to and from the connection device 30 through the terminals 211 and 34.

The determiner 25 determines whether the connection device 30 is the first gaming device or the second gaming device based on the data received by the communication controller 27 from the connection device 30.

The communication controller 27 transmits the first ID or the second ID to the connection device 30 based on the determination result obtained by the determiner 25.

The output controller 28 converts a DisplayPort signal (a signal including image data and audio data) transmitted from the connection device 30 to the power supply device 20 into an HDMI signal including the image data and the audio data, and outputs the HDMI signal to the external display device 40 through the terminal 213. In the present embodiment, the output controller 28 obtains the DisplayPort signal from the connection device 30 through the communication controller 27.

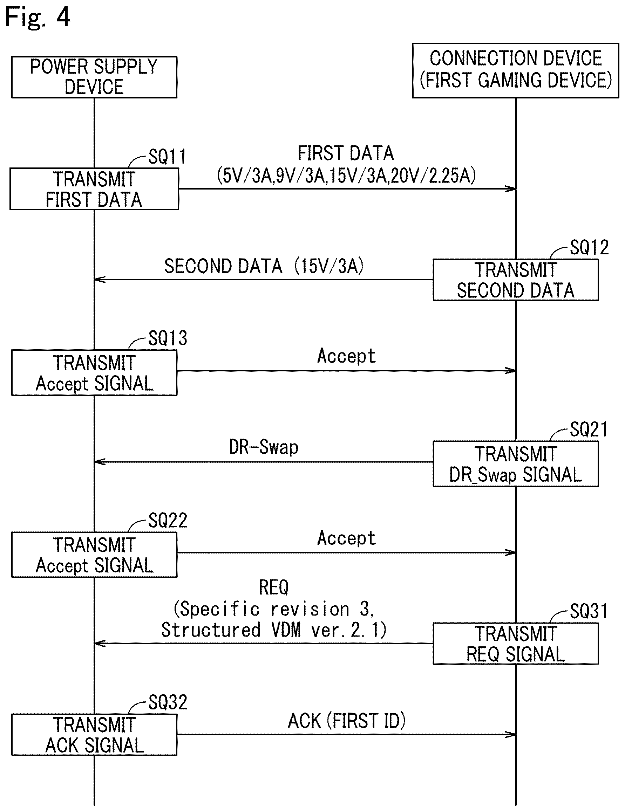

The processing performed by the determiner 25, the communication controller 27, and the output controller 28 in the power supply device 20 as well as by the connection device 30 will be described in more detail below with reference to Figs. 4, 5, and 6.

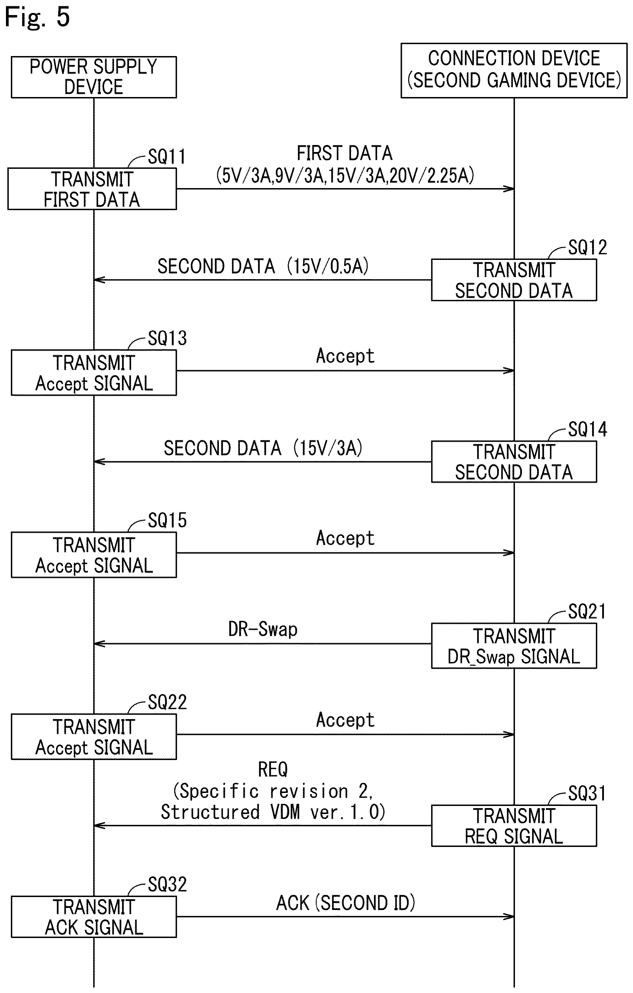

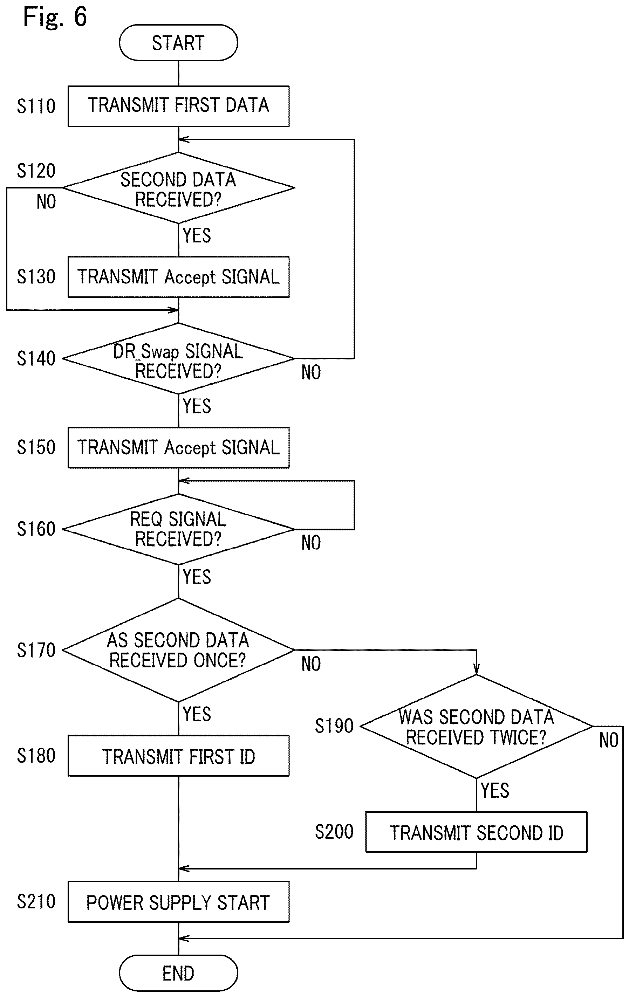

Fig. 4 is a sequence diagram of an example communication process performed by the power supply device and the connection device. Fig. 5 is a sequence diagram of an example communication process performed by the power supply device and the connection device. Fig. 6 is a flowchart of an example process performed by the power supply device.

One of the first gaming device or the second gaming device is received in the receiving portion 21B of the power supply device 20. This connects the terminal 34 of the connection device 30 (in other words, the first gaming device or the second gaming device) received in the receiving portion 21B to the terminal 211 of the power supply device 20. In other words, the connection device 30 and the power supply device 20 are connected.

In the present embodiment, the power supply device 20 supplies power to the connection device 30 under the USB Power Delivery (PD) standard. Thus, data is transmitted and received between the power supply device 20 and the connection device 30 based on the USB PD standard when the connection device 30 is connected to the power supply device 20. More specifically, a power contract process is performed in SQ11 to SQ15 in Figs. 4 and 5, a data role_swap (DR_Swap) process is performed in SQ21 and SQ22 in Figs. 4 and 5, and a discover identity process is performed in SQ31 and SQ32 in Figs. 4 and 5.

### (First Example of Processes)

An example (hereafter referred to as a first example) of the processes performed when the first gaming device is connected to the power supply device 20, or in other words, when the connection device 30 is the first gaming device will be described below with reference to Figs. 4 and 6.

When the connection device 30 and the power supply device 20 are connected, the communication controller 27 transmits first data to the connection device 30 (SQ11 in Fig. 4 and S110 in Fig. 6). The first data includes combinations of a voltage value and a current value. In the first example, the power supply device 20 serves as a battery with power of 45 W and an upper current limit of 3 A. The first data transmitted by the power supply device 20 thus includes four combinations of a voltage value and a current value satisfying the condition of the above power and current value. For example, the four combinations of a voltage value and a current value are a combination of 5 V and 3 A, a combination of 9 V and 3 A, a combination of 15 V and 3 A, and a combination of 20 V and 2.25 A. The number of combinations of a voltage value and a current value is not limited to four. The voltage values and the current values are not limited to the above values. Data is transmitted and received between the power supply device 20 and the connection device 30 through the terminal 34 of the connection device 30 and the terminal 211 of the power supply device 20.

The connection device 30 that has received the first data transmits second data to the communication controller 27 (SQ12 in Fig. 4). The second data includes a combination of a voltage value and a current value. In the first example, the first gaming device has an upper voltage limit of 15 V. In the first example, the first gaming device can change the current value based on the voltage value. The connection device 30, which is the first gaming device, thus selects, from the four voltage values (5 V, 9 V, 15 V, and 20 V) included in the first data, 15 V that is the upper limit and selects the current value of 3 A corresponding to the voltage value of 15 V. The connection device 30 thus transmits the combination of 15 V and 3 A to the communication controller 27 as the second data.

The first gaming device, which can change the current value, may select the current value of 2.25 A. However, in this example, the voltage value corresponding to the current value of 2.25 A is 20 V, which exceeds the upper limit. The current value of 2.25 A is thus not selected.

When receiving the second data (Yes in S120 in Fig. 6), the communication controller 27 transmits an accept signal to the connection device 30 (SQ13 in Fig. 4 and S130 in Fig. 6) and waits to receive a DR_Swap signal from the connection device 30 (S140 in Fig. 6).

When receiving no second data (No in S120 in Fig. 6), the communication controller 27 waits to receive a DR_Swap signal or the second data from the connection device 30 (S120 or S140 in Fig. 6), without transmitting an accept signal to the connection device 30.

In the first example, the connection device 30 receives the accept signal in return for transmission of the second data. The connection device 30 that has received the accept signal transmits the DR_Swap signal to the communication controller 27 (SQ21 in Fig. 4). When receiving the DR_Swap signal (Yes in S140 in Fig. 6), the communication controller 27 transmits an accept signal to the connection device 30 (SQ22 in Fig. 4 and S150 in Fig. 6).

When the DR_Swap process starts, the power contract process ends. In the first example, the communication controller 27 receives the second data once in the power contract process. The communication controller 27 may receive the second data more than once. For example, the communication controller 27 may receive the second data twice as in a second example (described later) or three or more times. In other words, the communication controller 27 receives, after transmitting the first data, the second data at least once from the connection device 30. The communication controller 27 may not receive the second data due to, for example, connection failure.

The connection device 30 that has received the accept signal in return for transmission of the DR_Swap signal transmits a request (REQ) signal to the communication controller 27 (SQ31 in Fig. 4). When the communication controller 27 receives the REQ signal (Yes in S160 in Fig. 6), the determiner 25 determines whether the connection device 30 is the first gaming device or the second gaming device based on the number of times the second data is received (S 170 in Fig. 6).

In the first example, the second data is received once (Yes in S170 in Fig. 6) as described above. The determiner 25 thus determines that the connection device 30 is the first gaming device. The determiner 25 instructs the communication controller 27 to transmit, to the connection device 30, the first ID corresponding to the first gaming device. In response to the instruction from the determiner 25, the communication controller 27 reads the first ID from the storage 26 and transmits the first ID to the connection device 30 (SQ32 in Fig. 4 and S180 in Fig. 6). The first ID is included in an acknowledge signal (ACK signal) transmitted by the communication controller 27 as a response to the REQ signal.

The connection device 30 performs authentication of the power supply device 20 based on the received first ID corresponding to the first gaming device. In the first example, the connection device 30 is the first gaming device, and the authentication is thus successful.

The connection device 30 may fail to authenticate the power supply device 20. For example, the connection device 30 fails in the authentication when the second ID corresponding to the second gaming device is transmitted from the power supply device 20 to the connection device 30 that is the first gaming device (No in S170, Yes in S190, and S200 in Fig. 6) although the first gaming device is connected to the power supply device 20. In other words, the connection device 30 fails in the authentication when obtaining, from the communication controller 27, an ID different from the corresponding ID among the first ID and the second ID.

The power supply device 20 supplies power to the connection device 30 (S210 in Fig. 6) after transmitting the ACK signal to the connection device 30, irrespective of whether the authentication is successful or failed.

When the power supply device 20 transmits no ACK signal to the connection device 30 (No in S190 in Fig. 6), the power supply device 20 does not feed power to the connection device 30. For example, in the first example and the second example described below, the communication controller 27 transmits the ACK signal including the first ID when the second data is received once, and an ACK signal including the second ID when the second data is received twice. The communication controller 27 thus transmits no ACK signal when the second data is not received or is received three or more times.

### (Second Example of Processes)

An example (hereafter referred to as the second example) of the processes performed when the second gaming device is connected to the power supply device 20, or in other words, when the connection device 30 is the second gaming device will be described below with reference to Figs. 5 and 6.

When the connection device 30 and the power supply device 20 are connected, the communication controller 27 transmits the first data to the connection device 30 (SQ11 in Fig. 5 and S110 in Fig. 6). In the second example, the power supply device 20 serves as a battery with power of 45 W and an upper current limit of 3A as in the first example, and transmits the first data similar to that in the first example.

The connection device 30 that has received the first data transmits the second data to the communication controller 27 (SQ12 in Fig. 5). In the second example, the second data includes a combination of a voltage value and a current value similar to that in the first example. In the second example, the second gaming device has an upper voltage limit of 15 V, similarly to the first gaming device. In the second example, the current value transmitted first by the second gaming device to the communication controller 27 is a fixed value (0.5 A in the second example). Thus, although the connection device 30, which is the second gaming device, selects 15 V that is the upper limit from the voltage values in the first data, the current value is fixed to 0.5 A. The connection device 30 thus transmits a combination of 15 V and 0.5 A to the communication controller 27 as the second data.

When receiving the second data (Yes in S120 in Fig. 6), the communication controller 27 transmits an accept signal to the connection device 30 (SQ13 in Fig. 5 and S130 in Fig. 6) and waits to receive a DR_Swap signal from the connection device 30 (S140 in Fig. 6).

When receiving no second data (No in S120 in Fig. 6), the communication controller 27 waits to receive a DR_Swap signal or the second data from the connection device 30 (S120 or S140 in Fig. 6), without transmitting an accept signal to the connection device 30.

In the second example, the connection device 30 that has received the accept signal in return for transmission of the second data transmits the second data again to the communication controller 27 (SQ14 in Fig. 5). The current value in the second data transmitted for the second time is reset to an optimum value of 3 A based on the voltage value of 15 V that is the same voltage value as in the previously transmitted second data and power of 45 W of the power supply device 20. The connection device 30 thus transmits the combination of 15 V and 3 A to the communication controller 27 as the second data transmitted for the second time.

When receiving the second data for the second time (Yes in S120 in Fig. 6), the communication controller 27 transmits an accept signal to the connection device 30 (SQ15 in Fig. 5 and S130 in Fig. 6) and waits to receive a DR_Swap signal from the connection device 30 (S140 in Fig. 6).

In the second example, the connection device 30 that has received the accept signal in return for transmission of the second data for the second time transmits the DR_Swap signal to the communication controller 27 (SQ21 in Fig. 5). When receiving the DR_Swap signal (Yes in S140 in Fig. 6), the communication controller 27 transmits an accept signal to the connection device 30 (SQ22 in Fig. 5 and S150 in Fig. 6).

When the DR_Swap process starts, the power contract process ends. In the second example, the communication controller 27 receives the second data twice in the power contract process.

The connection device 30 that has received the accept signal in return for transmission of the DR_Swap signal transmits an REQ signal to the communication controller 27 (SQ31 in Fig. 5). When the communication controller 27 receives the REQ signal (Yes in S160 in Fig. 6), the determiner 25 determines, as in the first example, whether the connection device 30 is the first gaming device or the second gaming device based on the number of times the second data is received (S170 in Fig. 6).

In the second example, the second data is received twice (No in S170 and Yes in S180 in Fig. 6) as described above. The determiner 25 thus determines that the connection device 30 is the second gaming device. The determiner 25 instructs the communication controller 27 to transmit, to the connection device 30, the second ID corresponding to the second gaming device. In response to the instruction from the determiner 25, the communication controller 27 reads the second ID from the storage 26 and transmits the second ID to the connection device 30 (SQ32 in Fig. 5 and S200 in Fig. 6). The second ID is included in the ACK signal transmitted by the communication controller 27 as a response to the REQ signal.

The connection device 30 performs authentication of the power supply device 20 based on the received second ID corresponding to the second gaming device. In the second example, the connection device 30 is the second gaming device, and the authentication is thus successful.

The power supply device 20 starts feeding power to the connection device 30 (S210 in Fig. 6) after transmitting the ACK signal to the connection device 30, irrespective of whether the authentication is successful or failed. When the power supply device 20 transmits no ACK signal to the connection device 30 (No in S190 in Fig. 6), the power supply device 20 does not feed power to the connection device 30.

### (Third Example of Processes)

In the first and second examples described above, the determiner 25 determines whether the connection device 30 is the first gaming device or the second gaming device based on the number of times the second data is received. However, the determiner 25 may determine whether the connection device 30 is the first gaming device or the second gaming device based on the data included in the REQ signal, as in a third example and a fourth example described below.

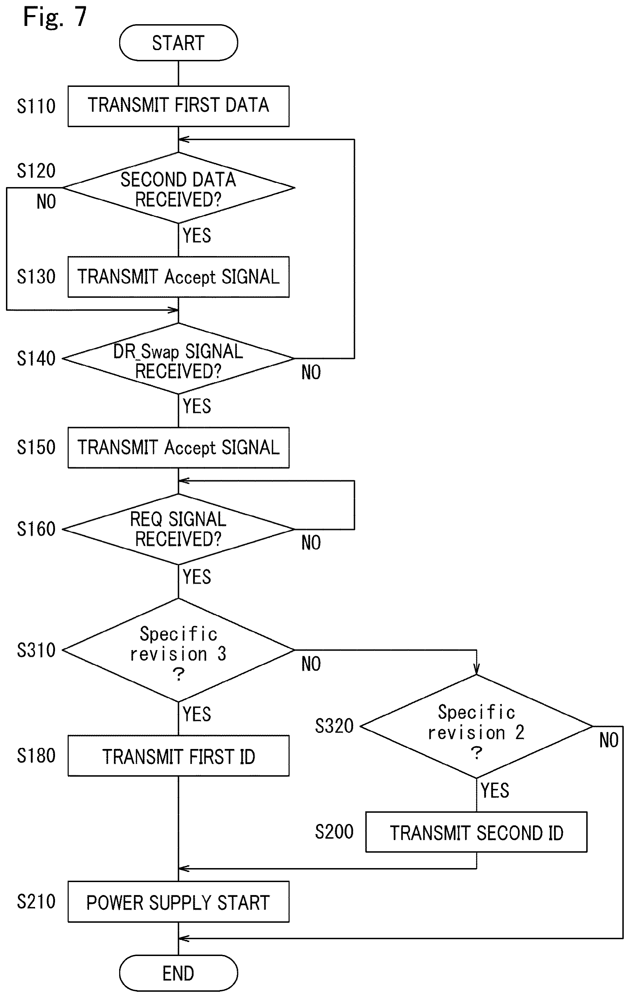

An example (hereafter referred to as the third example) of the processes performed when the first gaming device or the second gaming device is connected to the power supply device 20 will be described below with reference to Figs. 4, 5, and 7. Fig. 7 is a flowchart of an example process performed by the power supply device.

In the third example, the processing performed until the connection device 30 transmits the REQ signal is the same as that in the first example. In other words, the processing in SQ31 and before SQ31 in Figs. 4 and 5 as well as in S160 and before S160 in Fig. 7 is the same as that in the first example. Thus, the above processing will not be described.

In the third example, the REQ signal transmitted by the connection device 30 includes data about the number of a specific revision (SQ31 in Figs. 4 and 5).

When the communication controller 27 receives the REQ signal (Yes in S160 in Fig. 7), the determiner 25 determines whether the connection device 30 is the first gaming device or the second gaming device based on the number of the specific revision included in the REQ signal (S310 in Fig. 7).

In the third example, the number of the specific revision included in the REQ signal is 3 (SQ31 in Fig. 4 and Yes in S310 in Fig. 7) when the first gaming device is connected to the power supply device 20, or in other words, when the connection device 30 is the first gaming device. In this case, the determiner 25 determines that the connection device 30 is the first gaming device, and instructs the communication controller 27 to transmit, to the connection device 30, the first ID corresponding to the first gaming device.

In the third example, the number of the specific revision included in the REQ signal is 2 (SQ31 in Fig. 5, and No in S310 and Yes in S320 in Fig. 7) when the second gaming device is connected to the power supply device 20, or in other words, when the connection device 30 is the second gaming device. In this case, the determiner 25 determines that the connection device 30 is the second gaming device, and instructs the communication controller 27 to transmit, to the connection device 30, the second ID corresponding to the second gaming device.

In response to the instruction from the determiner 25, the communication controller 27 reads the first or second ID from the storage 26 and transmits the first or second ID to the connection device 30 (SQ32 in Fig. 4 or 5, and S180 or S200 in Fig. 7), as in the first example.

The connection device 30 performs authentication of the power supply device 20 based on the received first or second ID as in the first example.

The power supply device 20 supplies power to the connection device 30 (S210 in Fig. 7) after transmitting the ACK signal to the connection device 30 as in the first example.

When the power supply device 20 transmits no ACK signal to the connection device 30 (No in S320 in Fig. 7), the power supply device 20 does not feed power to the connection device 30. For example, in the third example, the communication controller 27 transmits the ACK signal including the first ID when the number of the specific revision is 3, and the ACK signal including the second ID when the number of the specific revision is 2. The communication controller 27 thus transmits no ACK signal when the number of the specific revision is other than 2 and 3.

### (Fourth Example of Processes)

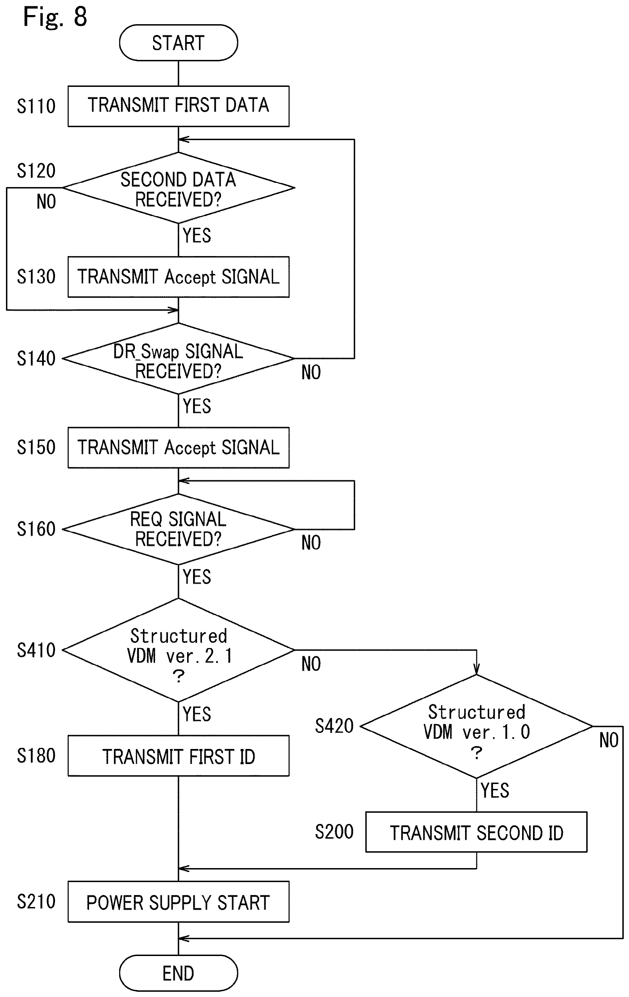

An example (hereafter referred to as the fourth example) of the processes performed when the first gaming device or the second gaming device is connected to the power supply device 20 will be described below with reference to Figs. 4, 5, and 8. Fig. 8 is a flowchart of an example process performed by the power supply device.

In the fourth example, the processing performed until the connection device 30 transmits the REQ signal is the same as that in the first example. In other words, the processing in SQ31 and before SQ31 in Figs. 4 and 5 as well as in S160 and before S160 in Fig. 8 is the same as that in the first example. Thus, the above processing will not be described.

In the fourth example, the REQ signal transmitted by the connection device 30 includes data about the version number of a structured vendor defined message (VDM).

When the communication controller 27 receives the REQ signal (Yes in S160 in Fig. 8), the determiner 25 determines whether the connection device 30 is the first gaming device or the second gaming device based on the version number of the structured VDM included in the REQ signal (S410 in Fig. 8).

In the fourth example, the version number of the structured VDM included in the REQ signal is 2.1 (SQ31 in Fig. 4 and Yes in S410 in Fig. 8) when the first gaming device is connected to the power supply device 20, or in other words, when the connection device 30 is the first gaming device. In this case, the determiner 25 determines that the connection device 30 is the first gaming device, and instructs the communication controller 27 to transmit, to the connection device 30, the first ID corresponding to the first gaming device.

In the fourth example, the version number of the structured VDM included in the REQ signal is 1.0 (SQ31 in Fig. 5, and No in S410 and Yes in S420 in Fig. 8) when the second gaming device is connected to the power supply device 20, or in other words, when the connection device 30 is the second gaming device. In this case, the determiner 25 determines that the connection device 30 is the second gaming device, and instructs the communication controller 27 to transmit, to the connection device 30, the second ID corresponding to the second gaming device.

In response to the instruction from the determiner 25, the communication controller 27 reads the first or second ID from the storage 26 and transmits the first or second ID to the connection device 30 (SQ32 in Fig. 4 or 5, and S180 or S200 in Fig. 8), as in the first example.

The connection device 30 performs authentication of the power supply device 20 based on the received first or second ID as in the first example.

The power supply device 20 supplies power to the connection device 30 (S210 in Fig. 8) after transmitting the ACK signal to the connection device 30 as in the first example.

When the power supply device 20 transmits no ACK signal to the connection device 30 (No in S420 in Fig. 8), the power supply device 20 does not feed power to the connection device 30. For example, in the fourth example, the communication controller 27 transmits the ACK signal including the first ID when the version number of the structured VDM is 2.1, and the ACK signal including the second ID when the version number of the structured VDM is 1.0. The communication controller 27 thus transmits no ACK signal when the version number of the structured VDM is other than 2.1 and 1.0.

In the first, second, third, and fourth examples, the connection device 30 does not transmit the DR_Swap signal or the REQ signal to the communication controller 27 unless the connection device 30 receives the corresponding accept signal. In this case, for example, the connection device 30 notifies a user of a connection failure to the power supply device 20 when no accept signal has been received after a predetermined time elapses from the transmission of the second data. Similarly, the connection device 30 notifies the user of a connection failure to the power supply device 20 when no accept signal has been received after a predetermined time elapses from the transmission of the DR_Swap signal. The notification is provided, for example, using the display of the connection device 30 or emitting a beep, a voice, or other sound from a speaker of the connection device 30.

In the first, second, third, and fourth examples, the connection device 30 notifies the user of a connection failure to the power supply device 20 when no ACK signal has been received after a predetermined time elapses from the transmission of the REQ signal. This situation can arise, for example, when a device different from the first gaming device and the second gaming device is connected to the power supply device 20. In the first and second examples, the determination is performed as to whether the connection device 30 is the first gaming device or the second gaming device when the number of times the second data is received satisfies a predetermined condition (first condition). In the third example, the determination is performed as to whether the connection device 30 is the first gaming device or the second gaming device when the specific revision satisfies a predetermined condition (second condition). In the fourth example, the determination is performed as to whether the connection device 30 is the first gaming device or the second gaming device when the version of the structured VDM satisfies a predetermined condition (third condition). In other words, in each of the first, second, third, and fourth examples, the determination is performed as to whether the connection device 30 is the first gaming device or the second gaming device when one of the above three predetermined conditions (the first, second, and third conditions) is satisfied, and the ID corresponding to the first gaming device or the second gaming device is transmitted. The determination may be performed as to whether the connection device 30 is the first gaming device or the second gaming device when two or three of the above three predetermined conditions are satisfied, and the ID corresponding to the first gaming device or the second gaming device may be transmitted. The determination may be performed as to whether the connection device 30 is the first gaming device or the second gaming device when at least one of the above three predetermined conditions is satisfied and a condition different from the above three predetermined conditions is further satisfied, and the ID corresponding to the first gaming device or the second gaming device may be transmitted.

### (Process after Authentication)

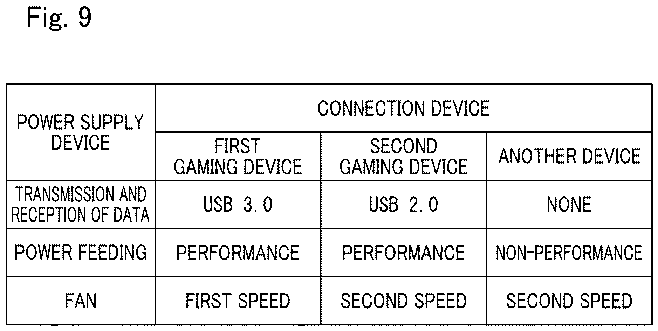

Fig. 9 is a table describing differences in the operation of the power supply system based on the type of the connection device. The differences in the operation of the power supply system after the authentication of the power supply device 20 performed by the connection device 30 will be described below with reference to Fig. 9.

As shown in the field of power feeding in Fig. 9, the power supply device 20 supplies power to the connection device 30 both when the connection device 30 is the first gaming device and when the connection device 30 is the second gaming device.

In contrast, the power supply device 20 does not feed power to the connection device 30 when the power supply device 20 transmits no ACK signal, for example, when another device other than the first gaming device and the second gaming device is connected to the power supply device 20 in the present embodiment.

Data is transmitted and received between the connection device 30 and the power supply device 20 when the authentication of the power supply device 20 performed by the connection device 30 is successful.

For example, the transmission and reception of data between the connection device 30 and the power supply device 20 described above is performed through the terminals 34 and 211 between the connection device 30 and the power supply device 20. Transmission of image data from the connection device 30 to the power supply device 20 performed to display an image on the external display device 40 is also included in the transmission and reception of data between the connection device 30 and the power supply device 20 described above.

The transmission and reception of data between the connection device 30 and the power supply device 20 described above differs between when the connection device 30 is the first gaming device and when the connection device 30 is the second gaming device. As shown in the field of data transmission and reception in Fig. 9, the communication controller 27 transmits and receives data to and from the connection device 30 based on the USB 3.0 standard when the determiner 25 determines that the connection device 30 is the first gaming device in the present embodiment. The communication controller 27 transmits and receives data to and from the connection device 30 based on the USB 2.0 standard when the determiner 25 determines that the connection device 30 is the second gaming device.

In the present embodiment, data is not transmitted and received between the connection device 30 and the power supply device 20 when another device other than the first gaming device and the second gaming device is connected to the power supply device 20.

The connection device 30 transmits image data (specifically, a DisplayPort signal) to the power supply device 20 in response to an instruction from the controller 33 when the authentication of the power supply device 20 is successful. The connection device 30 thus transmits no image data to the power supply device 20 when the authentication of the power supply device 20 is failed. In other words, the controller 33 in the connection device 30 does not instruct the power supply device 20 to transmit image data when the authentication of the power supply device 20 is failed. For example, the connection device 30 transmits no image data to the communication controller 27 when obtaining, from the communication controller 27, an ID different from the corresponding ID among the first ID and the second ID.

When the connection device 30 transmits, to the power supply device 20, corresponding image data corresponding to a predetermined image, the corresponding image data has different data volumes for the image data transmitted by the first gaming device and for the image data transmitted by the second gaming device. For example, the first gaming device transmits image data corresponding to 4K resolution, and the second gaming device transmits image data corresponding to 2K resolution. In this case, the image data transmitted by the first gaming device has a larger data volume than the image data transmitted by the second gaming device although the image data transmitted by the first gaming device and the image data transmitted by the first gaming device are used to display the same image.

Thus, when the communication controller 27 receives the corresponding image data from the connection device 30, the corresponding image data has different data volumes for the connection device 30 being the first gaming device and for the connection device 30 being the second gaming device.

The fan 23 is driven at a different speed based on the type of the connection device 30. For example, as shown in the field of fan in Fig. 9, the fan 23 is driven at a first speed when the connection device 30 is the first gaming device, and at a second speed slower than the first speed when the connection device 30 is the second gaming device. The second speed may be faster than the first speed. The fan 23 thus has different rotational speeds per unit time for the connection device 30 being the first gaming device and for the connection device 30 being the second gaming device. In the above examples, the fan 23 has a higher rotational speed per unit time for the connection device 30 being the first gaming device than for the connection device 30 being the second gaming device.

The fan 23 may or may not be driven when another device other than the first gaming device and the second gaming device is connected to the power supply device 20. In the present embodiment, the fan 23 is driven at the second speed when another device is connected to the power supply device 20.

The embodiments and modifications described above may be combined as appropriate with one another to produce their advantageous effects. Although the pieces of information corresponding to the IDs and the versions such as the product IDs, the first ID, the second ID, the specific revision, and the version of the structured VDM are numbers in the embodiments and modifications described above, the pieces of information are not limited to numbers. For example, pieces of information other than numbers such as identifiers may be used as the pieces of information corresponding to the IDs and the versions described above.

Although the present invention is fully described in specific embodiments with reference to the drawings as appropriate, modifications or changes to the embodiments are apparent to those skilled in the art. Such modifications or changes are intended to fall within the present invention without departing from the scope of the present invention defined by the appended claims.

### EXPLANATION OF REFERENCES

- 10: power supply system
- 20: power supply device
- 21B: receiving portion
- 23: fan
- 25: determiner
- 26: storage
- 27: communication controller
- 28: output controller
- 30: connection device
- 30B: opening
- 40: external display device

## Claims

1. A power supply device (20) connectable to a first gaming device and a second gaming device to feed power to a connection device (30), the connection device (30) being the first gaming device or the second gaming device connected to the power supply device (20), the power supply device (20) comprising:
a communication controller (27) configured to transmit and receive data to and from the connection device (30);
a determiner (25) configured to determine whether the connection device (30) is the first gaming device or the second gaming device based on data received by the communication controller (27) from the connection device (30); and
a storage (26) configured to store a first identifier corresponding to the first gaming device and a second identifier corresponding to the second gaming device,
wherein the communication controller (27) transmits the first identifier or the second identifier to the connection device (30) based on a determination result obtained by the determiner (25).

2. The power supply device (20) according to claim 1, wherein
the communication controller (27) transmits first data including a combination of a voltage value and a current value to the connection device (30), and receives, after transmitting the first data, second data including a combination of a voltage value and a current value at least once from the connection device (30), and
the determiner (25) determines whether the connection device (30) is the first gaming device or the second gaming device based on at least a number of times the second data is received.

3. The power supply device (20) according to claim 1 or 2, wherein
the power supply device (20) feeds power to the connection device (30) under a Universal Serial Bus Power Delivery (USB PD) standard, and
the determiner (25) determines whether the connection device (30) is the first gaming device or the second gaming device based on at least information corresponding to a specific revision or information corresponding to a version of a structured vendor defined message (VDM) included in the data received from the connection device (30).

4. The power supply device (20) according to any one of claims 1 to 3, further comprising:
an output controller (28) configured to output image data to an external display device (40) connected to the power supply device (20),
wherein when the communication controller (27) receives image data from the connection device (30) after transmitting the first identifier or the second identifier to the connection device (30), the output controller (28) outputs the image data received by the communication controller (27) to the external display device (40).

5. The power supply device (20) according to any one of claims 1 to 4, wherein
when the communication controller (27) receives, from the connection device (30), corresponding image data corresponding to a predetermined image, the corresponding image data has different data volumes for the connection device (30) being the first gaming device and for the connection device (30) being the second gaming device.

6. The power supply device (20) according to any one of claims 1 to 5, further comprising:
a fan (23) configured to allow air to flow between an inside and an outside of the power supply device (20),
wherein the fan (23) has different rotational speeds per unit time for the connection device (30) being the first gaming device and for the connection device (30) being the second gaming device.

7. The power supply device (20) according to claim 6, further comprising:
a receiving portion (21B) configured to receive the connection device (30),
wherein the power supply device (20) has an opening (21G) at a position to face the connection device (30) received in the receiving portion (21B) to allow airflow.

8. The power supply device (20) according to any one of claims 1 to 7, wherein
the communication controller (27) transmits and receives data to and from the connection device (30) based on a Universal Serial Bus 3.0 standard when the determiner (25) determines that the connection device (30) is the first gaming device, and transmits and receives data to and from the connection device (30) based on a Universal Serial Bus 2.0 standard when the determiner (25) determines that the connection device (30) is the second gaming device.

9. The power supply device (20) according to any one of claims 1 to 8, wherein
the first gaming device is a successor to the second gaming device.

10. A power supply system (10), comprising:
the power supply device (20) according to any one of claims 1 to 9; and
the connection device (30) connected to the power supply device (20),
wherein the connection device (30) transmits no image data to the communication controller (27) in the power supply device (20) when obtaining, from the communication controller (27) in the power supply device (20), an identifier different from a corresponding identifier among the first identifier and the second identifier, and
the power supply device (20) feeds power to the connection device (30).
